# EUROPÄISCHE PATENTANMELDUNG

(11) **EP 4 442 475 A1**
(43) Veröffentlichungstag der Anmeldung: **09.10.2024**
(21) Anmeldenummer: 24165876.4
(22) Anmeldetag: 25.03.2024
(51) Int. Cl.: B60G 17/015, B60G 17/056, B60G 17/06

(54) **HYDRAULIKBAUKASTEN**

(30) Priorität: 27.03.2023 DE 102023107610
(71) Anmelder: RAPA Automotive GmbH & Co. KG, 95100 Selb (DE)
(72) Erfinder: Kemnitz, Rocco, 95100 Selb (DE); Rubitzko, Tim, 951000 Selb (DE); Greim, Johannes, 95100 Selb (DE)
(74) Vertreter: Klunker IP Patentanwälte PartG mbB

(57) **Zusammenfassung**

Die Erfindung betrifft ein Hydrauliksystem für ein aktives Fahrwerk, umfassend
- eine Motor-Pumpe-Gruppe (20) mit einem Pumpengehäuse (22a) mit einem Befestigungsabschnitt (23) mit integrierter Fluidschnittstelle mit erster und zweiter Fluidöffnung (24), und
- einen Verbraucher (2) mit einem Gehäuse mit korrespondierendem Befestigungsabschnitt (3) und korrespondierender Fluidschnittstelle,
wobei der Verbraucher derart am Pumpengehäuse befestigbar ist, dass sich die Fluidöffnungen (4, 24) beider gegenüberliegen.

## Beschreibung

### GEBIET DER ERFINDUNG

Die vorliegende Erfindung betrifft ein Hydrauliksystem für ein aktives Fahrwerk eines Fahrzeugs, einen Achssatz und einen Bausatz dafür sowie eine Fahrwerkachse und ein Fahrwerksystem mit einem derartigen Hydrauliksystem.

### HINTERGRUND DER ERFINDUNG

Aktive Fahrwerksysteme sind beispielsweise aus DE 39 02 743 C1 oder DE 2 020 292 A1 bekannt. Dabei wird beispielsweise zwischen vollaktiven und semiaktiven Fahrwerksystemen unterschieden, in denen die Aufhängung entweder für jedes Rad einzeln oder achsweise aktiv angesteuert werden kann. Ein aktives Fahrwerk weist hydraulisch steuerbare Stoßdämpfer auf, bei denen die beiden Zylinder- bzw. Dämpferkammern des Arbeitszylinders eines Stoßdämpfers nicht lediglich über ein oder mehrere, gegebenenfalls steuerbare Dämpfungs- bzw. Drosselventile miteinander verbunden sind, sondern bei denen beispielsweise der Füllzustand der Zylinderkammern aktiv gesteuert werden kann und entsprechend bedarfsweise hydraulische Kräfte in das Fahrwerk eingeleitet werden können. Die beiden Zylinderkammern eines Stoßdämpfers können beispielsweise parallel oder alternativ zu den Dämpfungs- bzw. Drosselventilen über eine hydraulische Pumpe verbunden sein, die von einem Elektromotor angetrieben werden kann bzw. diesen dann als elektrischen Generator (Rekuperationsbetrieb) arbeitenden Elektromotor bzw. Elektromotorgenerator antreiben kann. Zusätzlich oder alternativ können mit Hilfe der Pumpe auch anderweitige Einstellungen in dem Stoßdämpfer vorgenommen werden.

Dadurch kann durch Pumpen von Hydraulikfluid beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor auch durch Rekuperation gewonnene elektrische Energie in das Bordnetz des Fahrzeugs zurück speisen. Weiterhin können bei Verwendung der Pumpe auch unterschiedliche Dämpfungsverhalten eingestellt werden, beispielsweise "weich" oder "hart" oder auch abhängig vom Fahrverhalten und/oder der Untergrundbeschaffenheit.

Generell werden somit die hydraulische Pumpe und der Elektromotorgenerator bzw. Elektromotor im aktiven Fahrwerk zum Ein- und/oder Ausleiten hydraulischer Energie verwendet. Dabei bilden die Pumpe und der Elektromotor in der Regel eine gemeinsame, kompakte Baueinheit, die im Folgenden als Motor-Pumpe-Gruppe bezeichnet wird. Ist an der Motor-Pumpe-Gruppe weiterhin eine elektrische Antriebs- und/oder Ansteuereinheit angeordnet, so wird dies im Folgenden auch als Motor-Pumpe-Einheit (MPE) bezeichnet.

Dabei ist es vorteilhaft wenn die Motor-Pumpe-Gruppe oder Motor-Pumpe-Einheit in räumlicher Nähe zu einem Verbraucher, das heißt dem Stoßdämpfer oder einem ggf. vorgelagerten sonstigen hydraulischen Element, angeordnet ist. Dies ist allerdings bauraumtechnisch nicht immer möglich und erfordert in der Regel Anpassungen am hydraulischen System aus Motor-Pumpe-Gruppe/-Einheit und Verbraucher.

### ZUSAMMENFASSUNG DER ERFINDUNG

Aufgabe der Erfindung ist es, ein Hydrauliksystem für ein aktives Fahrwerk eines Fahrzeugs anzugeben, welches aufwandsarm an unterschiedliche Bauraum-Erfordernisse angepasst werden kann. Es ist weiterhin Aufgabe der Erfindung einen entsprechenden Bausatz dafür sowie ein Fahrwerksystem mit einem derartigen Hydrauliksystem anzugeben.

Die Aufgabe wird gelöst durch die Gegenstände der unabhängigen Ansprüche. Bevorzugte Ausgestaltungen und Weiterbildungen sind in den davon abhängigen Ansprüchen angegeben.

Das erfindungsgemäße Hydrauliksystem für ein aktives Fahrwerk umfasst eine Motor-Pumpe-Gruppe und einen Verbraucher. Die Motor-Pumpe-Gruppe umfasst eine hydraulische Pumpe und einen Elektromotor, insbesondere Elektromotorgenerator, die miteinander beispielsweise über eine Motorwelle fest verbunden sind und baut auf den bekannten Motor-Pumpe-Gruppen auf. Die Motor-Pumpe-Gruppe umfasst weiterhin ein Pumpengehäuse, das denjenigen Abschnitt oder Teil eines ein- oder mehrteiligen Motor-Pumpe-Gehäuses bildet, der die Pumpe beherbergt/umschließt oder daran unmittelbar angrenzt. Das Pumpengehäuse bildet oder umfasst beispielsweise einen Pumpendeckel eines mehrteiligen Motor-Pumpe-Gehäuses, der vorzugsweise die Pumpe an einer axialen Stirnseite (vollständig) umschließt bzw. die axiale Stirnseite des Motor-Pumpe-Gehäuses bildet. Durch die axiale Stirnseite verläuft dann die Achse bzw. die Verlängerung einer Motorwelle der Motor-Pumpe-Gruppe. Die axiale Stirnseite verläuft in der Regel normal bzw. im Wesentlichen zur Motorwellenachse und/oder ist im einfachsten Fall im Wesentlichen oder vollständig plan ausgebildet.

Das Pumpengehäuse der Motor-Pumpe-Gruppen weist (genau) einen Befestigungsabschnitt zur (mechanisch stabilen) Anbringung bzw. Befestigung eines externen Bauteils bzw. Verbrauchers an dem Pumpengehäuse auf. Der Befestigungsabschnitt, der einen Abschnitt der Außenseite des Pumpengehäuses bildet bzw. auf der Außenseite des Pumpengehäuses angeordnet ist, ist bevorzugt auf der axialen Stirnseite des Pumpengehäuses angeordnet, besonders bevorzugt ausschließlich auf der axialen Stirnseite des Motor-Pumpe-Gehäuses, und/oder bildet die axiale Stirnseite des Motor-Pumpe-Gehäuses. Es ist auch denkbar, anstelle genau eines Befestigungsabschnitts mehrere, beispielsweise zwei, drei oder vier Befestigungsabschnitte auf der Außenseite des Pumpengehäuses vorzusehen, die beispielsweise jeweils voneinander beabstandet sind.

Erfindungsgemäß ist in den Befestigungsabschnitt eine Fluidschnittstelle für ein Hydraulikfluid integriert, das heißt die Fluidschnittstelle befindet sich innerhalb des Befestigungsabschnitts beispielsweise innerhalb einer Umrandung des Befestigungsabschnitts. Die Fluidschnittstelle weist dabei zumindest oder genau eine erste und eine zweite Fluidöffnung auf.

Der Verbraucher des erfindungsgemäßen Hydrauliksystems umfasst ebenfalls ein ein- oder mehrteiliges Gehäuse. Dieses Verbrauchergehäuse weist einen zu dem Befestigungsabschnitt des Pumpengehäuses korrespondierenden Befestigungsabschnitt auf. Der Befestigungsabschnitt des Verbrauchers bzw. des Verbrauchergehäuses weist eine zu der Fluidschnittstelle des Pumpengehäuses korrespondierende Fluidschnittstelle mit erster und zweiter Fluidöffnung auf, die entsprechend ebenfalls in den Befestigungsabschnitt des Verbrauchergehäuses integriert ist.

Erfindungsgemäß ist der Verbraucher als das externe Bauteil am Pumpengehäuse der Motor-Pumpe-Gruppe über die jeweiligen Befestigungsabschnitte befestigbar, derart dass sich die ersten Fluidöffnungen der beiden Fluidschnittstellen und sich die zweiten Fluidöffnungen der beiden Fluidschnittstellen unmittelbar bzw. direkt gegenüberliegen.

Dadurch kann das Hydraulikfluid widerstandsarm zwischen Motor-Pumpe-Gruppe und Verbraucher fließen, wenn der Verbraucher an der Motor-Pumpe-Gruppe angebracht ist, und es ist möglich die beiden Fluidschnittstellen auf unterschiedliche Weise zu koppeln.

Bevorzugt sind alle ersten und zweiten Fluidöffnungen identisch ausgebildet, weisen den gleichen Durchmesser auf und/oder sind kreisrunde bzw. zylindrische Bohrungen, deren Zentralachsen parallel zu der Motorwelleachse verlaufen.

Das erfindungsgemäße Hydrauliksystem dient bevorzugt zum Ein- und/oder Ausleiten hydraulischer Energie in den Verbraucher oder via den Verbraucher in ein nachgelagertes System, wie zum Beispiel einen Stoßdämpfer, oder daraus heraus.

In einer bevorzugten Ausgestaltung umfasst das Hydrauliksystem weiterhin hydraulische Koppelmittel zum Schaffen einer fluiddichten hydraulischen Verbindung zwischen jeweils den ersten Hydrauliköffnungen und den zweiten Hydrauliköffnungen der Motor-Pumpe-Gruppe und des Verbrauchers.

Die Koppelmittel umfassen oder bestehen beispielsweise aus wenigstens einem oder genau zwei O-Ringen, welche dazu eingerichtet sind, bei Anbringung des Verbrauchers an der Motor-Pumpe-Gruppe zwischen dem Pumpengehäuse und dem Gehäuse des Verbrauchers im einfachsten Fall unmittelbar durch die beiden Gehäuse (Pumpengehäuse und Verbrauchergehäuse) bzw. die korrespondierenden Befestigungsabschnitte der beiden Gehäuse geklemmt zu werden. Dazu weisen die O-Ringe einen Durchmesser auf, der größer ist als der Durchmesser der Fluidöffnungen, und/oder sind dazu eingerichtet, konzentrisch um die Fluidöffnungen herum angeordnet zu werden. Bevorzugt weisen die (bevorzugt als Flansch ausgebildeten) Befestigungsabschnitte um die Fluidöffnungen herum jeweils eine konzentrische Vertiefung für einen O-Ring auf. Entsprechend sind die O-Ringe dazu eingerichtet, eine axiale Abdichtung an den Fluidöffnungen auszubilden.

In einer Variante umfassen oder bestehen die Koppelmittel aus wenigstens einem oder genau zwei bevorzugt (vollständig) zylindrischen Koppeladaptern bzw. Einsteckadaptern, die jeweils zwei radiale Dichtringe auf der Außenseite aufweisen. Die Koppeladapter sind dabei teilweise, bevorzugt hälftig in jeweils sich gegenüberliegende Fluidöffnungen einsteckbar, so dass jeweils ein radialer Dichtring an einer Innenseite der Fluidöffnung eingreift, in die der Adapter teilweise bzw. hälftig eingesteckt ist. Entsprechend sind die Adapter dazu eingerichtet, eine radiale Abdichtung an bzw. in den Fluidöffnungen auszubilden.

Die Koppelmittel in Form von O-Ringen und/oder Koppeladaptern sind somit eingerichtet eine dichte hydraulische Verbindung zwischen Verbraucher und Motor-Pumpe-Gruppe bei Anbringung des Verbrauchers an der Motor-Pumpe-Gruppe an den jeweiligen Befestigungsabschnitten zu schaffen.

Alternativ umfassen oder bestehen die Koppelmittel aus zwei (beispielsweise freitragenden und/oder starren oder flexiblen) Hydraulik- bzw. Fluidleitungen (Schlauchleitungen, Schläuche, etc.), deren vier (in der Regel identisch ausgebildete) Leitungsenden zur fluiddichten Anbringung bzw. Befestigung an den Fluidöffnungen vorgesehen sind.

In einer ersten Variante weist ein (axiales) Leitungsende einen Einsteckabschnitt auf, der in eine Fluidöffnung einsteckbar ist. Der Einsteckabschnitt des Leitungsendes ist bevorzugt zylindrisch ausgebildet und/oder weist jeweils ein oder zwei radiale Dichtringe auf seiner Außenseite auf. Der Einsteckabschnitt ist im einfachsten Fall wie ein zuvor beschriebener Koppeladapter bzw. wie eine Hälfte davon ausgebildet. Entsprechend ist das Leitungsende bzw. dessen Einsteckabschnitt dazu eingerichtet, eine radiale Abdichtung an bzw. in einer gegebenen Fluidöffnung auszubilden.

In einer zweiten Variante weist ein Leitungsende eine Fluidöffnung auf, in die ein wie zuvor beschriebener Koppeladapter bzw. eine Hälfte davon einsteckbar ist. Entsprechend schafft der Koppel- bzw. Einsteckadapter eine radiale Abdichtung an bzw. in der jeweiligen Fluidöffnung.

In einer dritten Variante weist ein Leitungsende eine Fluidöffnung auf sowie einen die Fluidöffnung umgebenden Flansch auf. Die Koppelmittel umfassen weiterhin einen wie oben beschriebenen O-Ring, der konzentrisch um die Fluidöffnung herum angeordnet und zwischen dem Flansch des Leitungsendes und dem (bevorzugt als Flansch ausgebildeten) Befestigungsabschnitt von Pumpen- bzw. Verbrauchergehäuse geklemmt wird. Bevorzugt weisen der Befestigungsabschnitt von Pumpen- bzw. Verbrauchergehäuse und der Flansch des Leitungsendes um die Fluidöffnung herum jeweils eine konzentrische Vertiefung für den O-Ring auf, die sich gegenüberliegen.

Die Leitungsenden weisen bevorzugt weiterhin Befestigungsmittel zu deren mechanischer Befestigung an den Befestigungsabschnitten von Verbraucher und Motor-Pumpe-Gruppe (Pumpen- bzw. Verbrauchergehäuse) auf, so dass sich die Leitungsenden bzw. Fluidöffnungen der Hydraulik- bzw. Fluidleitungen und die Fluidöffnungen in den Befestigungsabschnitten von Verbraucher und Motor-Pumpe-Gruppe gegenüberliegen. Bevorzugt sind die beiden Fluidleitungen als ein Doppelschlauch ausgebildet. Weiterhin sind bevorzugt alle (vier) Leitungsenden der beiden Hydraulik- bzw. Fluidleitungen identisch ausgebildet.

Die Koppelmittel in Form von zwei Fluidleitungen sind somit eingerichtet, an den jeweiligen Befestigungsabschnitten bzw. den jeweiligen Fluidschnittstellen eine dichte hydraulische Verbindung zwischen Verbraucher und Motor-Pumpe-Gruppe bei entfernter Anordnung des Verbrauchers von der Motor-Pumpe-Gruppe zu schaffen.

In einer bevorzugten Ausgestaltung des Hydrauliksystems sind die Befestigungsabschnitte von Motor-Pumpe-Gruppe und/oder Verbraucher als korrespondierende Flansche ausgebildet, bevorzugt mit identischen Abmessungen bzw. Außenabmessungen. Entsprechend weisen die Befestigungsabschnitte korrespondierende ebene Flächenabschnitte auf, an denen die Befestigungabschitte bei Anbringung des Verbrauchers an der Motor-Pumpe-Gruppe flächig aneinander eingreifen bzw. aneinander anstoßen. Beispielsweise weisen die Befestigungsabschnitte jeweils einen durchgängig umlaufenden, ebenen Rand (das heißt mit konstanter Höhe bzw. stufenlos) auf, wodurch eine sehr hohe mechanische Stabilität der Befestigung des Verbrauchers am Pumpengehäuse erzielt werden kann.

Bevorzugt sind die Befestigungsabschnitte ebene Flansche, das heißt sie bestehen im Wesentlichen aus einer ebenen Fläche. Beispielsweise besteht ein ebener Flansch aus einer einzigen ebenen Fläche mit konstanter Höhe, die unterbrochen ist ausschließlich von der integrierten Fluidschnittstelle, das heißt den beiden Fluidöffnungen, sowie ggf. von (korrespondierenden) Gewinde- und/oder Schraubenlöchern zur Befestigung des Verbrauchers an der Motor-Pumpe-gruppe und/oder zur Befestigung von Koppelmitteln an den Befestigungsabschnitten.

Bevorzugt weist der Befestigungsabschnitt der Motor-Pumpe-Gruppe eine Mehrzahl von Gewindelöchern auf und der Befestigungsabschnitt des Verbrauchers die gleiche Mehrzahl von korrespondierenden Schraubenlöchern. Entsprechend kann der Verbraucher an der Motor-Pumpe-Gruppe verschraubt werden. Weiterhin weisen beide Befestigungsabschnitte ein, zwei oder mehr weitere Gewindelöcher zur Befestigung (der Befestigungsmittel) der Leitungsenden der Fluidleitungen auf. Dabei sind die beiden Fluidöffnungen und die ggf. vorgesehenen Gewinde- und/oder Schraubenlöcher bevorzugt in die Flansche integriert, das heißt sie werden von dem jeweiligen Flansch, beispielsweise von dessen jeweiliger ebenen Fläche, vollständig umschlossen. Besonders bevorzugt ist der Flansch am Pumpengehäuse der Motor-Pumpe-Gruppe normal zur Motorwellenachse ausgebildet.

Das Hydrauliksystem ist weiterhin bevorzugt so ausgebildet, dass der Verbraucher an der Motor-Pumpe-Gruppe ausschließlich über deren Befestigungsabschnitte aneinander befestigt werden kann. Die Flansche bilden entsprechend Befestigungsflansche, die eine ausreichend hohe mechanische Stabilität aufweisen.

In einer bevorzugten Ausgestaltung des Hydrauliksystems ist der Verbraucher ein hydraulisch steuerbarer Stoßdämpfer oder ein Ventilblock.

Dabei ist der Ventilblock bevorzugt eine kompakte Baueinheit und/oder weist ein geschlossenes Gehäuse auf und umfasst beispielsweise eine, zwei, drei, vier oder mehrere hydraulische Baugruppen bzw. Baueinheiten (die in der Regel im Innern des Gehäuses angeordnet sind) und/oder zwei, vier, sechs, acht oder mehrere hydraulische Anschlüsse (die bevorzugt auf der Außenseite des Gehäuses angeordnet sind). Die Baugruppen können jeweils als aktive und/oder passive Baugruppen, insbesondere als aktive und/oder passive Ventile ausgebildet sein. Beispielsweise ist eine Baugruppe ausgebildet als Schaltventil, Regelventil, Druckregelventil, Drosselventil (passiv oder aktiv), Rückschlagventil, Sicherheitsventil (Überdruck-Begrenzung, passiv), Richtungs-Ventil (Schaltventil), Fluid-Filter, Strömungsteiler bzw. Weiche (passiv) und/oder hydraulischer Druck- bzw. Fluidspeicher (Hydraulikfluidspeicher).

Weiterhin bilden die hydraulischen Anschlüsse Hydraulikabgänge beispielsweise
- zu der Motor-Pumpe-Gruppe, und/oder
- zu einem, zwei oder mehreren Unterverbrauchern wie Aktuatoren, (hydraulisch steuerbaren) Stoßdämpfern und/oder Hydraulikfluidspeichern, und/oder
die hydraulischen Anschlüsse sind dafür eingerichtet.

Ein Verbraucher in Form eines Ventilblocks erweitert allgemein die Funktionalität des Hydrauliksystems, beispielsweise
- fügt der Ventilblock der Motor-Pumpe-Gruppe als Volumenstromregler/-lieferant eine Druckregelfunktion hinzu, und/oder
- leitet der Ventilblock den Hydraulikfluidstrom der Motor-Pumpe-Gruppe gezielt zu einer Vielzahl von Unterverbrauchern, insbesondere mit Hilfe von passiven und/oder aktiven bzw. steuerbaren Ventilen, und/oder
- steuert der Ventilblock zumindest oder genau einen oder zwei interne oder externe Hydraulikfluidspeicher an, beispielsweise um einen Volumenausgleich im Hydrauliksystem zu schaffen, um etwa Fluidbewegung durch Druckstöße an einem Verbraucher, insbesondere einem Stoßdämpfer, oder durch anderweitige hoch-dynamische Anforderungen/Belastungen und/oder durch Temperatureinfluss auszugleichen, und/oder
- stellt der Ventilblock eine hydraulische Grundfunktion bei Ausfall der Motor-Pumpe-Einheit zu Verfügung (Failsafe-Funktionalität) und erfüllt somit eine sicherheitsrelevante Funktion.

Der Elektromotor bzw. Elektromotorgenerator der Motor-Pumpe-Gruppe ist bevorzugt ein bürstenloser, permanenterregter Motor, insbesondere Synchronmotor, insbesondere DrehstromSynchronmotor, mit bevorzugt genau drei Motorphasen-Zuleitungen. Der Elektromotor ist weiterhin bevorzugt ein drehzahlvariabler Antrieb, der als Stellmotor betreibbar und dazu eingerichtet und vorgesehen ist, vorbestimmte Stellungen bzw. Positionen gezielt anzufahren und/oder zu halten. Der Elektromotor ist weiterhin bevorzugt ein bidirektionaler Antrieb, der in beiden Rotationsrichtungen betrieben werden kann, und besonders bevorzugt auch Vier-Quadranten-fähig ist, das heißt er kann in beide Rotationsrichtungen auch als elektrischer Generator betrieben werden (Elektromotorgenerator).

Die hydraulische Pumpe der Motor-Pumpe-Gruppe ist bevorzugt eine Zahnradpumpe, besonders bevorzugt eine Innenzahnradpumpe. Diese sind bevorzugt leckagekompensiert, das heißt sie weisen kleine und/oder vernachlässigbare Leckagen auf, so dass die geförderte Hydraulikfluidmenge mit dem Rotationsumfang fest verknüpft ist (hoher volumetrischer Wirkungsgrad). Entsprechend ist bevorzugt die Motor-Pumpe-Gruppe als Stellpumpe bzw. Stellantrieb für den Verbraucher betreibbar und dazu eingerichtet und vorgesehen, vorbestimmte hydraulische Stellungen bzw. Positionen des Verbrauchers gezielt anzufahren und zu halten. Eine Motor-Pumpe-Gruppe mit einer leckagekompensierten Innenzahnradpumpe für den Reversierbetrieb ist beispielsweise aus der DE 10 2014 103 958 A1 bekannt, deren Offenbarungsgehalt, insbesondere hinsichtlich der Ausgestaltung der Innenzahnradmaschine (Axialdichtscheiben, Radialdichtelemente, etc.), in den Offenbarungsgehalt der vorliegenden Beschreibung aufgenommen wird.

Das Hydrauliksystem umfasst bevorzugt weiterhin eine Elektronikeinheit zur elektrischen Ansteuerung und zur elektrischen Versorgung bzw. zum elektrischen Antrieb des Motors der Motor-Pumpe-Gruppe. Im einfachsten Fall liefert die Elektronikeinheit direkt und unmittelbar die bzw. sämtliche Spulenströme bzw. Motorphasenströme für den Elektromotor der Motor-Pumpe-Gruppe und/oder weist die Motor-Pumpe-Gruppe beispielsweise innerhalb des Motor-Pumpe-Gehäuses keine elektrischen Schaltbauteile und/oder keine elektronischen bzw. integrierten Bauteile auf und/oder ist die Elektronikeinheit genau oder zumindest über drei (einadrige) Motorphasenleitungen bzw. Magnetspulenzuleitungen mit dem Elektromotor der Motor-Pumpe-Gruppe elektrisch verbunden.

Weiterhin sind bevorzugt die Motor-Pumpe-Gruppe und die Elektronikeinheit (bzw. die dadurch gebildete Motor-Pumpe-Einheit) in einem gemeinsamen Gehäuse bzw. Motor-Pumpe-Einheit-Gehäuse angeordnet, das insbesondere ein mehrteiliges gemeinsames Gehäuse ist, das aus genau oder zumindest dem Motor-Pumpe-Gehäuse (in welchem die Motor-Pumpe-Gruppe bevorzugt vollständig aufgenommen ist) und einem Gehäuse der Elektronikeinheit bzw. Elektronikdeckel (in welchem die Elektronikeinheit bevorzugt vollständig aufgenommen ist) zusammengefügt ist. Dabei verlaufen die elektrischen Leitungen zwischen der Elektronikeinheit und der Motor-Pumpe-Gruppe bzw. dessen Elektromotor bevorzugt vollständig innerhalb des Motor-Pumpe-Einheit-Gehäuses. Weiterhin bildet das gemeinsame Motor-Pumpe-Einheit-Gehäuse bevorzugt ein geschlossenes, dichtes Gehäuse, das dicht gegenüber Verschmutzungen und anderen Umwelteinflüssen ist, beispielsweise luftdicht, wasserdicht oder spritzwasserdicht, womit das hydraulisch System beispielsweise an einer Fahrzeugunterseite verbaut werden kann. Das gemeinsame Gehäuse ist weiterhin bevorzugt auch dicht bzw. abschirmend gegenüber elektromagnetischer Strahlung, die beispielsweise aufgrund von hohen Wechselströmen im Elektromotor generiert wird, um die EMV-Belastung gering zu halten bzw. zu reduzieren. Bevorzugt umfasst das gemeinsame Motor-Pumpe-Einheit-Gehäuse auf seiner Außenseite bzw. auf der Außenseite des Elektronikdeckels als elektrische Schnittstellen genau eine Busschnittelle (beispielsweise für einen CAN-Bus oder einen LIN-Bus) und genau eine Versorgungsspannungs-Schnittelle, insbesondere für eine Hochvolt-Spannung von beispielsweise 400V oder 800V.

Die Erfindung betrifft weiterhin einen Achssatz bzw. Motor-Pumpe-Einheit-Achssatz umfassend in einer ersten Alternative (genau) zwei wie oben beschriebene Hydrauliksysteme. Der Achssatz umfasst bevorzugt eine gemeinsame Elektronikeinheit für die Motor-Pumpe-Gruppen bzw. die Elektromotoren beider Hydrauliksysteme. Die gemeinsame Elektronikeinheit ist dabei zur unabhängigen elektrischen Ansteuerung und elektrischen Versorgung bzw. zum elektrischen Antrieb der Elektromotoren beider Motor-Pumpe-Gruppen eingerichtet.

Im einfachsten Fall liefert die gemeinsame Elektronikeinheit direkt und unmittelbar die bzw. sämtliche Spulenströme bzw. Motorphasenströme für die Elektromotoren beider Motor-Pumpe-Gruppen und/oder weisen die Motor-Pumpe-Gruppen beispielsweise innerhalb der jeweiligen Motor-Pumpe-Gehäuse keine elektrischen Schaltbauteile und/oder keine elektronischen bzw. integrierten Bauteile auf und/oder ist die gemeinsame Elektronikeinheit genau oder zumindest über jeweils drei (einadrige) Motorphasenleitungen bzw. Magnetspulenzuleitungen mit den beiden Elektromotoren der beiden Motor-Pumpe-Gruppen elektrisch verbunden.

Weiterhin sind bevorzugt die beiden Motor-Pumpe-Gruppen und die gemeinsame Elektronikeinheit (bzw. der dadurch gebildete Motor-Pumpe-Einheit-Achssatz) in einem gemeinsamen Gehäuse bzw. Achssatzgehäuse angeordnet, das insbesondere ein mehrteiliges gemeinsames Gehäuse ist, das aus genau oder zumindest den beiden Motor-Pumpe-Gehäusen (in welchen jeweils die Motor-Pumpe-Gruppen bevorzugt vollständig aufgenommen sind) und einem Gehäuse der gemeinsamen Elektronikeinheit bzw. Elektronikdeckel (in welchem die gemeinsame Elektronikeinheit bevorzugt vollständig aufgenommen ist) zusammengefügt ist. Dabei verlaufen die elektrischen Leitungen zwischen der gemeinsamen Elektronikeinheit und den beiden Motor-Pumpe-Gruppen bzw. deren Elektromotoren bevorzugt vollständig innerhalb des Achssatzgehäuses. Weiterhin bildet das gemeinsame Achssatzgehäuse bevorzugt ein geschlossenes, dichtes Gehäuse, das dicht gegenüber Verschmutzungen und anderen Umwelteinflüssen ist, beispielsweise luftdicht, wasserdicht oder spritzwasserdicht, womit der Achssatz beispielsweise an einer Fahrzeugunterseite verbaut werden kann. Das gemeinsame Achssatzgehäuse ist weiterhin bevorzugt auch dicht bzw. abschirmend gegenüber elektromagnetischer Strahlung, die beispielsweise aufgrund von hohen Wechselströmen in den Elektromotoren generiert wird, um die EMV-Belastung gering zu halten bzw. zu reduzieren. Bevorzugt umfasst das Achssatzgehäuse auf seiner Außenseite bzw. auf der Außenseite des Elektronikdeckels als elektrische Schnittstellen genau eine Busschnittelle (beispielsweise für einen CAN-Bus oder einen LIN-Bus) und genau eine Versorgungsspannungs-Schnittelle, insbesondere für eine Hochvolt-Spannung von beispielsweise 400V oder 800V.

In einer zweiten Alternative umfasst der Achssatz (genau) zwei wie oben beschriebene Hydrauliksysteme mit jeweiligen Elektronikeinheiten, wobei bevorzugt jeweils die Motor-Pumpe-Gruppe und die Elektronikeinheit beider Hydrauliksysteme als Motor-Pumpe-Einheit ausgebildet und/oder in jeweiligen Motor-Pumpe-Einheit-Gehäusen angeordnet sind. Bevorzugt sind dabei die Motor-Pumpe-Einheiten fest miteinander verbunden, bevorzugt miteinander verschraubt oder auf einer gemeinsamen Montageplatte montiert und/oder in einem gemeinsamen Gehäuse angeordnet.

In einer bevorzugten Ausgestaltung des Achssatzes umfasst das erste Hydrauliksystem als Koppelmittel zwei (wie oben beschriebene) O-Ringe oder Koppeladapter und das zweite Hydrauliksystem als Koppelmittel zwei (wie oben beschriebene) Fluidleitungen. Das erste Hydrauliksystem ist somit eingerichtet, eine dichte hydraulische Verbindung zwischen Verbraucher und Motor-Pumpe-Gruppe bei unmittelbarer Anbringung des Verbrauchers an der Motor-Pumpe-Gruppe an den jeweiligen Befestigungsabschnitten zu schaffen. Das zweite Hydrauliksystem ist dagegen eingerichtet, an den jeweiligen Befestigungsabschnitten eine dichte hydraulische Verbindung zwischen Verbraucher und Motor-Pumpe-Gruppe bei entfernter Anordnung des Verbrauchers von der Motor-Pumpe-Gruppe zu schaffen.

Die Erfindung betrifft weiterhin einen Baukasten umfassend in einer ersten Variante (genau) ein wie oben beschriebenes Hydrauliksystem sowie ein Koppelmittel in Form von zwei Fluidleitungen und ein Koppelmittel in Form von zwei O-Ringen und/oder zwei Koppeladaptern. Der Bausatz enthält somit alle notwendigen Koppelmittel zur wahlweisen Anbringung des Verbrauchers direkt an der Motor-Pumpe-Gruppe oder zur entfernten Anordnung des Verbrauchers.

In einer ersten Variante umfasst der Baukasten (genau) einen wie oben beschriebenen Achssatz sowie zwei Koppelmittel in Form von jeweils zwei Fluidleitungen und zwei Koppelmittel in Form von jeweils zwei O-Ringen und/oder zwei Koppeladaptern. Der Bausatz enthält somit für beide Hydrauliksysteme die notwendigen Koppelmittel zur wahlweisen Anbringung des Verbrauchers direkt an der Motor-Pumpe-Gruppe oder zur entfernten Anordnung des Verbrauchers.

Der erfindungsgemäße Bausatz schafft somit ein Hydrauliksystem und/oder einen Achssatz, welche flexibel an verschiedene oder sich verändernde Bauraumsituationen angepasst werden können.

In einer bevorzugten Ausgestaltung des Hydrauliksystems ist der Verbraucher an dem Befestigungsabschnitt der Motor-Pumpe-Gruppe befestigt und Koppelmittel in Form von zwei O-Ringen oder zwei Koppeladaptern schaffen eine hydraulische Verbindung zwischen Motor-Pumpe-Gruppe und Verbraucher. Dabei ist der Verbraucher bevorzugt ausschließlich über die korrespondierenden Befestigungsabschnitte an der Motor-Pumpe-Gruppe befestigt.

Alternativ ist der Verbraucher von der Motor-Pumpe-Gruppe entfernt angeordnet und Koppelmittel in Form von zwei Fluidleitungen schaffen eine hydraulische Verbindung zwischen Motor-Pumpe-Gruppe und Verbraucher. Dabei weisen die Leitungsenden der Fluidleitungen Befestigungmittel auf, die an den Befestigungsabschnitten von Motor-Pumpe-Gruppe und Verbraucher befestigt sind, insbesondere in dafür vorgesehenen Gewindelöchern verschraubt sind.

In einer bevorzugten Ausgestaltung des Achssatzes ist in erstem und zweitem Hydrauliksystem der Verbraucher an dem Befestigungsabschnitt der Motor-Pumpe-Gruppe befestigt und Koppelmittel in Form von zwei O-Ringen oder zwei Koppeladaptern schaffen eine hydraulische Verbindung zwischen Motor-Pumpe-Gruppe und Verbraucher. Dabei ist der Verbraucher in erstem und zweitem Hydrauliksystem bevorzugt ausschließlich über die korrespondierenden Befestigungsabschnitte an der jeweiligen Motor-Pumpe-Gruppe befestigt.

Alternativ ist in erstem und zweitem Hydrauliksystem der Verbraucher von der Motor-Pumpe-Gruppe entfernt angeordnet und Koppelmittel in Form von zwei Fluidleitungen schaffen eine hydraulische Verbindung zwischen Motor-Pumpe-Gruppe und Verbraucher. Dabei weisen in erstem und zweitem Hydrauliksystem die Leitungsenden der Fluidleitungen Befestigungmittel auf, die an den Befestigungsabschnitten von Motor-Pumpe-Gruppe und Verbraucher befestigt sind, insbesondere in dafür vorgesehenen Gewindelöchern verschraubt sind.

Weiter alternativ ist in dem ersten Hydrauliksystem der Verbraucher an dem Befestigungsabschnitt der Motor-Pumpe-Gruppe befestigt und Koppelmittel in Form von zwei O-Ringen oder zwei Koppeladaptern schaffen eine hydraulische Verbindung zwischen Motor-Pumpe-Gruppe und Verbraucher. Dabei ist der Verbraucher in dem ersten Hydrauliksystem bevorzugt ausschließlich über die korrespondierenden Befestigungsabschnitte an der Motor-Pumpe-Gruppe befestigt. Weiterhin ist in dem zweiten Hydrauliksystem der Verbraucher von der Motor-Pumpe-Gruppe entfernt angeordnet und Koppelmittel in Form von zwei Fluidleitungen schaffen eine hydraulische Verbindung zwischen Motor-Pumpe-Gruppe und Verbraucher. Dabei weisen in dem zweiten Hydrauliksystem die Leitungsenden der Fluidleitungen Befestigungmittel auf, die an den Befestigungsabschnitten von Motor-Pumpe-Gruppe und Verbraucher befestigt sind, insbesondere in dafür vorgesehenen Gewindelöchern verschraubt sind.

Ein erfindungsgemäßes Fahrwerksystem bzw. eine erfindungsgemäße Fahrwerkachse für ein Fahrzeug umfasst zumindest einen ersten und zweiten hydraulisch aktiv steuerbaren Stoßdämpfer mit jeweils zwei beispielsweise durch einen beweglichen Dämpferkolben getrennten Dämpfer- bzw. Druckkammern, welche bevorzugt einer gemeinsamen Fahrwerkachse zugeordnet oder an dieser angeordnet sind, sowie ein erstes und ein zweites wie oben beschriebenes Hydrauliksystem oder einen wie oben beschriebenen Achssatz, wobei die Motor-Pumpe-Gruppe oder der Verbraucher bzw. Ventilblock des ersten Hydrauliksystems die Druckkammern des ersten Stoßdämpfers hydraulisch miteinander verbindet und die Motor-Pumpe-Gruppe oder der Verbraucher bzw. Ventilblock des zweiten Hydrauliksystems die Druckkammern des zweiten Stoßdämpfers hydraulisch miteinander verbindet. Dadurch kann beispielsweise eine "weiche" oder "harte" Dämpfung eingestellt werden, indem beispielsweise Druckstöße aus den Drucckammern durch die jeweilige Motor-Pumpe-Gruppe mehr oder weniger gedämpft bzw. gedrosselt werden. In diesem Fall wird somit die jeweilige Motor-Pumpe-Gruppe hydraulisch angetrieben, so dass die Elektromotoren der Motor-Pumpe-Gruppen als Elektromotorgeneratoren betrieben werden können und somit elektrische Energie rückgewonnen werden kann (Rekuperation). Alternativ können Druckstöße aus den Druckkammern auch durch die passiven und/oder aktiven Baugruppen und/oder Ventile im Verbraucher bzw. Ventilblock gedämpft bzw. gedrosselt werden. Weiterhin kann auch die Null- bzw. Ruhelage der Stoßdämpfer aktiv bzw. gezielt eingestellt und auch während des Fahrbetriebs (laufend) verändert werden (aktives Fahrwerk). Dabei handelt es sich jeweils bevorzugt um ein geschlossenes hydraulisches System, in welchem beispielsweise kein druckloser Tank vorgesehen ist. Es versteht sich, dass das Fahrwerksystem eine oder mehrere weitere bevorzugt ebenso ausgestaltete Achsen aufweisen kann.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Figur 1: zeigt eine perspektivische Ansicht eines Motor-Pumpe-Achssatzes mit zwei Ventilblöcken gemäß einem ersten Ausführungsbeispiel,
- Figur 2: zeigt eine perspektivische Ansicht eines Motor-Pumpe-Achssatzes mit zwei Ventilblöcken gemäß einem zweiten Ausführungsbeispiel,
- Figuren 3 und 4: zeigen eine perspektivische Ansicht eines Befestigungsflansches mit Koppelmitteln,
- Figur 5: zeigt eine perspektivische Ansicht einer MPE,
- Figur 6: zeigt eine schematische Ansicht eines Fahrwerksystems mit einem Achssatz, und
- Figur 7: zeigt ein Hydrauliksystem mit Stoßdämpfer.

### DETAILLIERTE BESCHREIBUNG

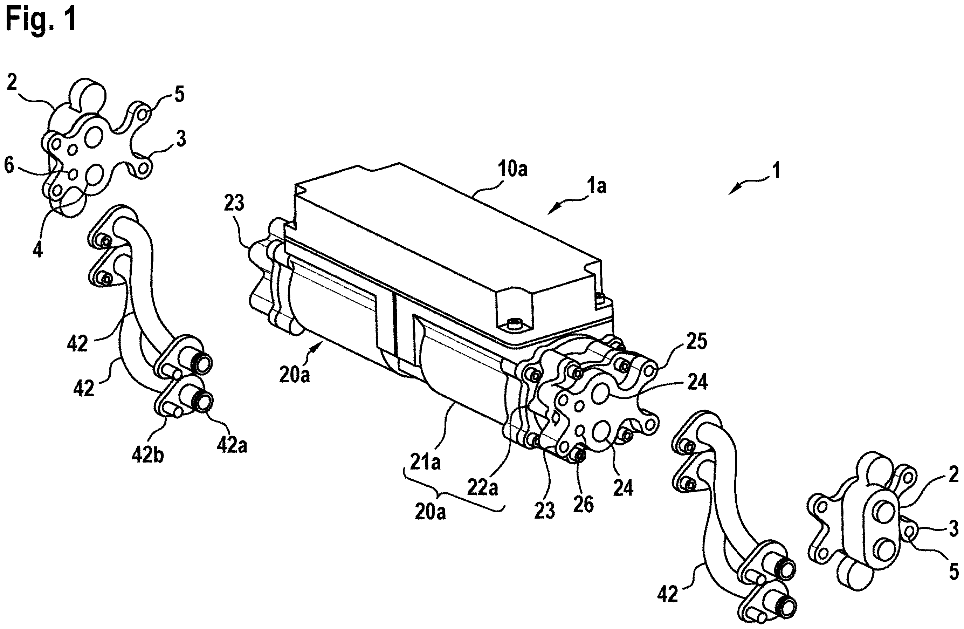

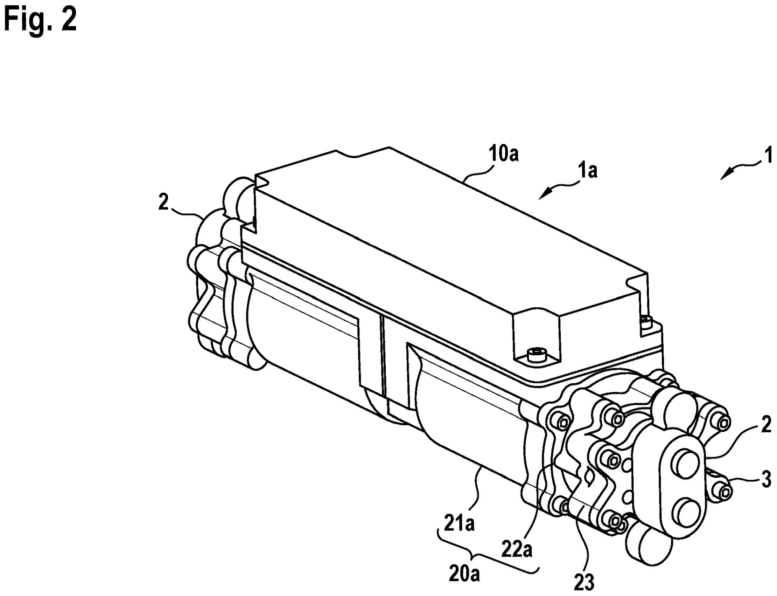

In den Figuren 1 und 2 sind perspektivische Ansichten von zwei verschiedene Ausführungsbeispiele bzw. Anschlussvarianten eines Achssatzes bzw. MPE-Achssatzes 1 dargestellt.

Der Achssatz 1 umfasst eine erste und eine zweite Motor-Pumpe-Gruppe 20, eine gemeinsame Elektronikeinheit 11 und zwei Ventilblöcke 2. Dabei sind in beiden Ausführungsbeispielen die beiden Motor-Pumpe-Gruppen 20 und die gemeinsame Elektronikeinheit 11 in einem geschlossenen, mehrteiligen Achssatzgehäuse 1a angeordnet, welches aus einem Elektronikdeckel 10a (der die gemeinsame Elektronikeinheit 11 beherbergt) und zwei Motor-Pumpe-Gehäusen 20a (die jeweils eine Motor-Pumpe-Gruppe 20 beherbergen) besteht. Jedes der Motor-Pumpe-Gehäuse 20a besteht dabei aus einem Motorgehäuse 21a und einem Pumpengehäuse 22a, die jeweils einen Elektromotor bzw. Elektromotorgenerator 21 und eine Pumpe 22 beherbergen. An dem Pumpengehäuse 22a, das auf der pumpennahen, axialen Stirnseite des Motor-Pumpe-Gehäuses 20a angeordnet ist, befindet sich ein Befestigungsflansch 23 für die Befestigung einer externen Vorrichtung, beispielsweise eines Ventilblocks 2, wie dies in dem Ausführungsbeispiel der Figur 2 dargestellt ist, wobei der Ventilblock 2 hierzu einen korrespondierenden Befestigungsflansch 3 aufweist. In die Befestigungsflansche 3, 23 sind jeweils Fluidschnittstellen integriert, die vorliegend aus jeweils zwei Fluidöffnungen 4, 24 bestehen.

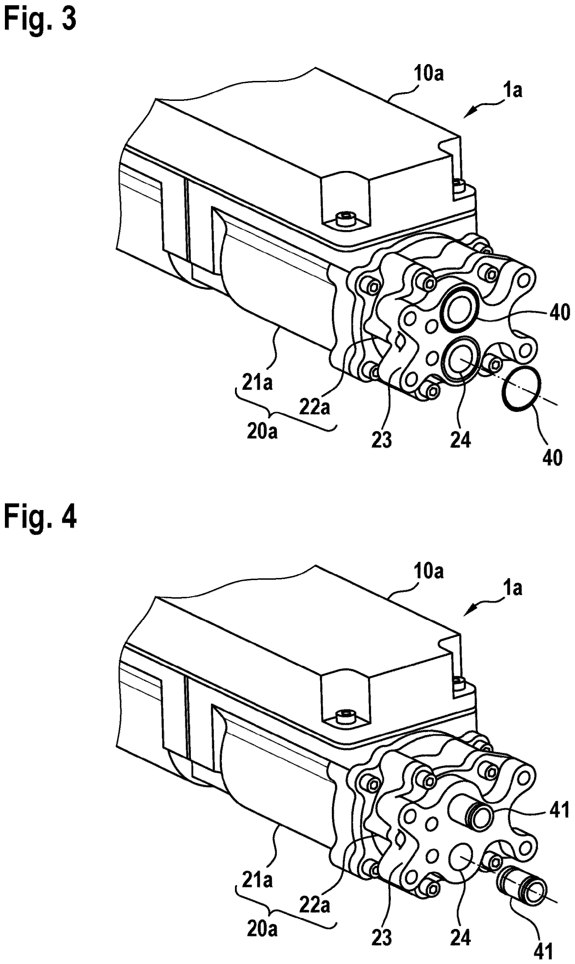

In dem in Figur 2 dargestellten Ausführungsbeispiel, in welchem die Ventilblöcke 2 am Pumpengehäuse 22a angeflanscht sind, werden in einer ersten Variante als hydraulische Koppelmittel die in Figur 3 dargestellten O-Ringe 40 zum Ausbilden einer fluiddichten Verbindung zwischen der Motor-Pumpe-Gruppe 20 und dem Ventilblock 2 verwendet. Die beiden O-Ringe 40 sind dabei jeweils konzentrisch um die Fluidöffnungen 4, 24 angeordnet und werden beim Befestigen des Ventilblocks 2 zwischen den beiden Befestigungsflanschen 3, 23 geklemmt, wodurch eine axiale Abdichtung geschaffen wird.

In einer zweiten, in Figur 4 dargestellten Variante werden anstelle der O-Ringe 40 als hydraulische Koppelmittel zwei zylindrische Koppeladapter 41 verwendet, die jeweils zur Hälfte in die sich gegenüberliegenden Fluidöffnungen 4, 24 eingesteckt sind und auf ihrer Außenseite jeweils einen Dichtring aufweisen, der bei Befestigung des Ventilblocks 2 am Pumpengehäuse 22a in einer Fluidöffnung 4, 24 positioniert ist und dort eine radiale Abdichtung schafft. In den Figuren 3 und 4 sind die Koppelmittel 40, 41 an der in der Figur unteren Fluidöffnung 4 in einer Explosionsdarstellung gezeigt.

Der Befestigungsflansch 23 des Pumpengehäuses 22a umfasst in dem dargestellten Ausführungsbeispiel weiterhin vier Gewindelöcher 25, die mit vier Schraubenlöchern 5 in dem Befestigungsflansch 3 des Ventilblocks 2 korrespondieren und entsprechend die in Figur 2 dargestellte Verschraubung des Ventilblocks 2 am Pumpengehäuse 22a gestatten.

Darüberhinaus umfassen in den dargestellten Ausführungsbeispielen beide Befestigungsflansche 3, 23 jeweils zwei (weitere) Gewindelöcher 6, 26 zur wahlweisen Befestigung von Fluidleitungen 42. Die Fluidleitungen 42 weisen - wie beispielsweise in Figur 1 dargestellt - an ihren Leitungsenden in die Fluidöffnungen 4, 24 einsteckbare zylindrische Koppelelemente 43 auf mit einem Dichtring auf der radialen Außenseite zum Schaffen einer radialen Abdichtung zwischen der Fluidöffnung 4, 24 und der Fluidleitung 42. Darüberhinaus weisen die Leitungsenden Befestigungsmittel 44 auf, umfassend eine Schraube, die mit den Gewindelöchern 6, 36 der Befestigungsflansche 3, 23 korrespondiert, womit die Leitungsenden der Fluidleitungen 42 an den Befestigungsflanschen 3, 23 fixiert werden können.

Entsprechend können je nach Bauraumerfordernis die Ventilblöcke 2 - wie in Figur 2 dargestellt - direkt an dem Achssatz 1 angeordnet werden oder sie können entfernt davon positioniert werden, wie dies in Figur 1 dargestellt ist. Die zwischen den Motor-Pumpe-Gruppen 20 und den Ventilblöcken 2 notwendige hydraulische Verbindung wird dann über die jeweils geeigneten Koppelmittel in Form von O-Ringen 40, Koppeladaptern 41 oder Fluidleitungen 42 geschaffen, ohne eine über diese Auswahl der Koppelmitteln hinausgehende, weitere Anpassung an dem Achssatz notwendig zu machen.

In einem nicht dargestellten Ausführungsbeispiel des Achssatzes ist in dem ersten Hydrauliksystem der Ventilblock 2 an dem Befestigungsflansch 23 des Pumpengehäuses 22a befestigt und als Koppelmittel sind zwei O-Ringe 40 oder zwei Koppeladapter 41 vorgesehen. Dagegen sind in dem zweiten Hydrauliksystem der Ventilblock 2 und die Motor-Pumpe-Gruppe 20 voneinander beabstandet angeordnet und als Koppelmittel sind zwei Fluidleitungen 42 vorgesehen.

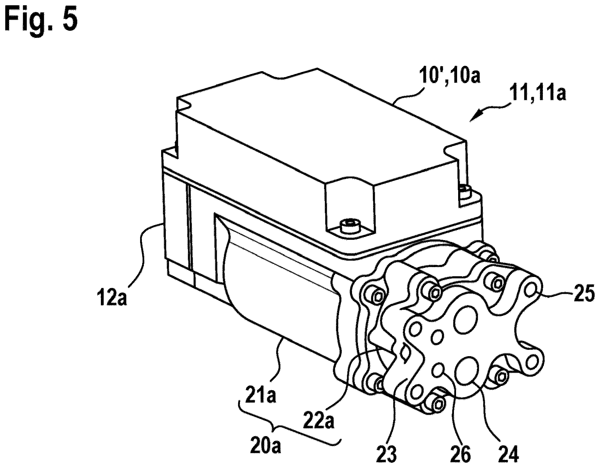

In Figur 5 ist ein Hydrauliksystem dargestellt. Dieses umfasst genau eine Motor-Pumpe-Gruppe 20, eine Elektronikeinheit 12 und einen Ventilblock 2. Dabei bilden die Motor-Pumpe-Gruppe 21 und die Elektronikeinheit 12 eine MPE 11 (Motor-Pumpe-Einheit) und sind in einem geschlossenen, mehrteiligen MPE-Gehäuse 11a angeordnet, welches aus einem Elektronikdeckel 10a (der die Elektronikeinheit 11 beherbergt) und einem Motor-Pumpe-Gehäuse 20a (das die Motor-Pumpe-Gruppe 20 beherbergt) und in dem dargestellten Ausführungsbeispiel weiterhin aus einem weiteren Gehäusedeckel 12a besteht. Das Motor-Pumpe-Gehäuse 20a ist dabei wie oben im Zusammenhang mit dem Achssatz 1 beschrieben ausgebildet. Entsprechend kann durch die geeignete Auswahl des hydraulischen Koppelmittels 40, 41, 42 der Ventilblock 2 wahlweise an der MPE 11 bzw. am Pumpengehäuse 22a direkt angeflanscht oder auch von der MPE 11 beabstandet angeordnet werden, ohne eine über diese Auswahl der Koppelmittel hinausgehende, weitere Anpassung an dem Hydrauliksystem notwendig zu machen.

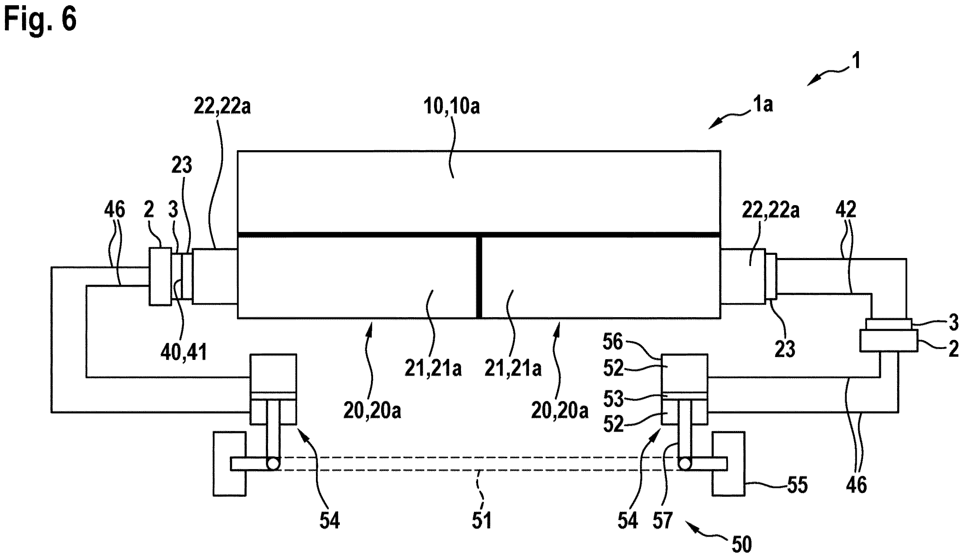

In Figur 6 ist ein Fahrwerksystem 50 mit einem Achssatz 1 schematisch dargestellt. Darin sind die in den Pumpengehäusen 22a der Motor-Pumpe-Gruppen 20a angeordneten Pumpen 22 über jeweilige Ventilblöcke 2 mit den Druckkammern 52 eines Stoßdämpfers 54 verbunden.

In dem in Figur 6 auf der rechten Seite dargestellten Hydrauliksystem ist der Ventilblock 2 von dem Pumpengehäuse 22a entfernt angeordnet und über Fluidleitungen 42 hydraulisch mit der Pumpe 22 verbunden, wobei Leitungsenden der Fluidleitungen 42 an den Befestigungsflanschen 3, 23 von Ventilblock 2 und Pumpengehäuse 22a befestigt sind. Zwischen Ventilblock 2 und dem Stoßdämpfer 54 sind weitere Hydraulikleitungen 46 vorgesehen. In dem in Figur 6 auf der linken Seite dargestellten Hydrauliksystem ist der Ventilblock 2 direkt an dem Pumpengehäuse 22a über die jeweiligen Befestigungsflansche 3, 23 angeflanscht. In diesem Hydrauliksystem schaffen nicht-dargestellte Koppelelemente (z.B. O-Ringe 40 oder Koppeladapter 41) eine fluiddichte hydraulische Verbindung zwischen der Pumpe 22 und dem Ventilblock 2, und zwischen Ventilblock 2 und dem Stoßdämpfer 54 sind wiederum Hydraulikleitungen 46 vorgesehen. In einer nicht dargestellten Variante ist der Ventilblock 2 unmittelbar am Stoßdämpfer 54 angeordnet und es sind Fluidleitungen 42 zwischen Ventilblock 2 und Pumpe 22 vorgesehen.

In dem dargestellten Ausführungsbeispiel ist der Ventilblock 2 (als Verbraucher) der Motor-Pumpe-Gruppe 20 und dem Stoßdämpfer 54 (als Unterverbraucher) zwischengeschaltet und steuert keine anderweitigen Unterverbraucher an. Der Ventilblock 2 weist entsprechend vier hydraulische Anschlüsse bzw. Fluidöffnungen 4 auf.

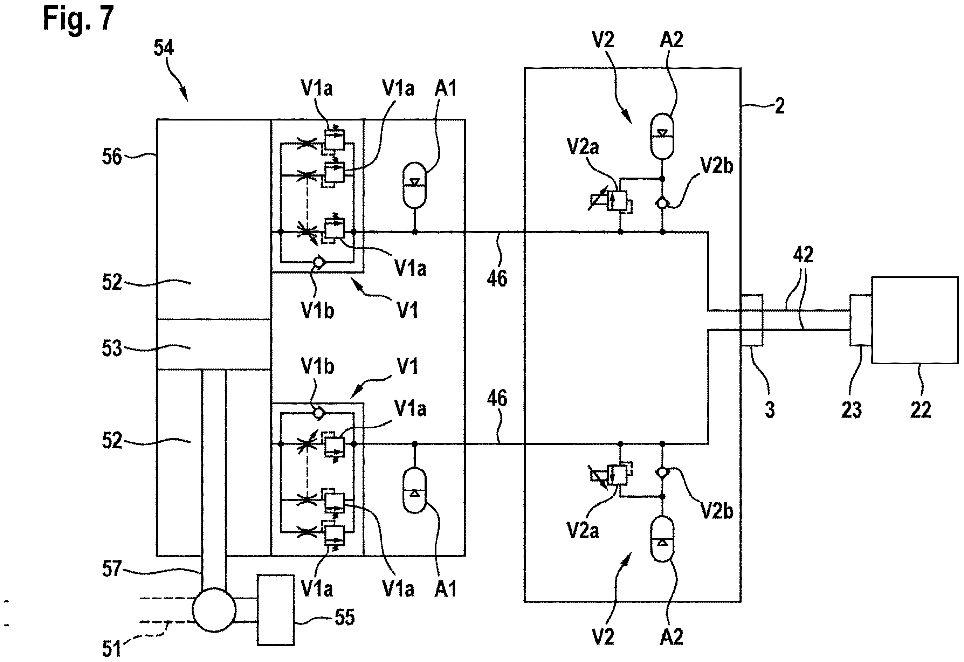

In Figur 7 ist das auf der rechten Seite in Figur 6 dargestellte Hydrauliksystem mit höherem Detailgrad und mit den (internen) Baugruppen des Ventilblocks 2 und des Stoßdämpfers 54 dargestellt. Dabei ist das Hydrauliksystem im Wesentlichen symmetrisch aufgebaut und weist zwei Hydraulikzweige auf, die jeweils die Pumpe 22 mit einer der beiden Druckkammern 52 des Stoßdämpfers 54 verbinden. Der Ventilblock 2 umfasst innerhalb eines geschlossenen Gehäuses für jeden dieser Hydraulikzweige eine Ventileinheit V2 und einen Hydraulikfluidspeicher A2. Die Ventileinheit V2 besteht aus einem variablen Druckbegrenzungsventil V2a und einem Rückschlagventil V2b. Der Stoßdämpfer 54 umfasst ebenfalls innerhalb eines geschlossenen Gehäuses, neben dem Kolben 53, dem Druckzylinder 56, der Kolbenstange 57 und den beiden resultierenden Druckkammern 52, für jeden der beiden Hydraulikzweige des Hydrauliksystems eine Ventileinheit V1 und einen Hydraulikfluidspeicher A1. Die Ventileinheit V1 besteht aus einem Klappenventil V1a und einem Rückschlagventil V1b. Dieses Hydrauliksystem und dessen Funktionsweise ist noch genauer in der Druckschrift DE 10 2018 215 037 A1 beschrieben. Der Offenbarungsgehalt der Druckschrift DE 10 2018 215 037 A1 insgesamt und insbesondere zu dem Ausführungsbeispiel der Figur 2 (Absätze [0016] bis [0070]) wird hiermit in den Offenbarungsgehalt der vorliegenden Druckschrift mit aufgenommen.

In dem Hydrauliksystem können externe Störungen, etwa durch Bodenwellen oder Schlaglöcher vorrangig mit Hilfe der Ventileinheiten V1 und der Hydraulikfluidspeicher A1 gedämpft werden, während vorrangig der Ventilblock 2 mit den Ventileinheiten V2 und den Hydraulikfluidspeichern A2 die Versorgung mit Hydraulikfluid beim Arbeiten der Pumpe 22 gewährleistet.

In einem nicht dargestellten Ausführungsbeispiel sind die Hydraulikfluidspeicher A2 extern zu bzw. an dem Ventilblock 2 angeordnet und beispielsweise direkt an dem geschlossenen Gehäuse des Ventilblock montiert bzw. angeflanscht oder entfernt angeordnet und über jeweils eine Hydraulikfluidleitung verbunden.

In dem dargestellten Ausführungsbeispiel sind die Zylinder der Stoßdämpfer 54 mit der gefederten Masse des Fahrzeugs bzw. der Karosserie verbunden, während die Kolben 53 mit der ungefederten Masse des Fahrzeugs bzw. jeweils einem Rad 55 und gegebenenfalls, soweit vorhanden, auch mit einer Fahrwerkachse 51 verbunden bzw. gekoppelt sind. Dies kann jedoch auch umgekehrt ausgestaltet sein. Weiterhin wurde in der schematischen Darstellung von Figur 6 auf üblicherweise zusätzlich vorgesehene Federelemente, beispielsweise ein Luft- und/oder Stahlfederelement, verzichtet.

### BEZUGSZEICHENLISTE

- 1: Achssatz, MPE-Achssatz
- 1a: Achssatzgehäuse
- 11: MPE
- 11a: MPE-Gehäuse
- 12a: Gehäusedeckel

- 2: Verbraucher, Ventilblock
- 3: Befestigungsflansch am Ventilblock
- 4: Fluidöffnung
- 5: Schraubenlöcher
- 6: Gewindelöcher

- 10: gemeinsame Elektronikeinheit
- 10': Elektronikeinheit
- 10a: Elektronikdeckel
- 20: Motor-Pumpe-Gruppe
- 20a: Motor-Pumpe-Gehäuse
- 21: Elektromotor, Elektromotorgenerator
- 21a: Motorgehäuse
- 22: Pumpe
- 22a: Pumpengehäuse

- 23: Befestigungsflansch am Pumpengehäuse
- 24: Fluidöffnung
- 25: Gewindelöcher
- 26: Gewindelöcher

- 40: O-Ring
- 41: Koppeladapter
- 42: Fluidleitungen
- 42a: Koppelelement, Leitungsende
- 42b: Befestigungsmittel
- 46: Hydraulikleitungen
- 50: Fahrwerksystem
- 51: Fahrwerkachse
- 52: Druckkammer
- 53: Kolben
- 54: Stoßdämpfer
- 55: Rad
- 56: Druckzylinder
- 57: Kolbenstange

- V1, V2: Ventileinheit
- V1a: Klappenventil
- V1b: Rückschlagventil
- V2a: Druckbegrenzungsventil
- V2b: Rückschlagventil
- A1, A2: Hydraulikfluidspeicher

## Patentansprüche

1. Hydrauliksystem für ein aktives Fahrwerk, umfassend
- eine Motor-Pumpe-Gruppe (20) mit einem Pumpengehäuse (22a) mit einem, bevorzugt stirnseitigem Befestigungsabschnitt (23) zur Anbringung eines externen Bauteils (2) mit integrierter Fluidschnittstelle mit erster und zweiter Fluidöffnung (24), und
- einen Verbraucher (2) mit einem Gehäuse mit korrespondierendem Befestigungsabschnitt (3) und korrespondierender Fluidschnittstelle,
wobei der Verbraucher derart am Pumpengehäuse befestigbar ist, dass sich jeweils die ersten Fluidöffnungen (4, 24) der beiden Fluidschnittstellen und jeweils die zweiten Fluidöffnungen (4, 24) der beiden Fluidschnittstellen gegenüberliegen.

2. Hydrauliksystem nach Anspruch 1, weiterhin umfassend Koppelmittel zum Schaffen einer hydraulischen Verbindung zwischen jeweils den ersten Fluidöffnungen (4, 24) und den zweiten Fluidöffnungen (4, 24), umfassend
- wenigstens einen oder genau zwei O-Ringe (40), welche dazu eingerichtet sind bei Anbringung des Verbrauchers (2) an dem Pumpengehäuse (22a) zwischen den Befestigungsabschnitten (3, 23) von Pumpengehäuse (22a) und Verbraucher (2) geklemmt zu werden, und/oder
- wenigstens einen oder genau zwei Koppeladapter (41), die jeweils zwei radiale Dichtringe aufweisen, und/oder
- zwei bevorzugt flexible Fluidleitungen (42), deren Leitungsenden (42a) zur fluiddichten Anbringung an den Fluidöffnungen (4, 24) vorgesehen sind und insbesondere zwei radiale Dichtringe aufweisen.

3. Hydrauliksystem nach Anspruch 1 oder 2,
- wobei die Befestigungsabschnitte (3, 23) von Motor-Pumpe-Gruppe (20) und/oder Verbraucher (2) als Flansche ausgebildet sind, bevorzugt als ebene Flansche,
- wobei besonders bevorzugt der Flansch des Pumpengehäuses (22a) normal zu einer Motorwellenachse ausgebildet ist, und/oder
- wobei bevorzugt in die Flansche Gewinde- und/oder Schraubenlöcher integriert sind.

4. Hydrauliksystem nach einem der vorhergehenden Ansprüche, wobei der Verbraucher (2) ein hydraulisch steuerbarer Stoßdämpfer oder ein Ventilblock ist, wobei der Ventilblock bevorzugt
- als kompakte Baueinheit bzw. mit einem geschlossenen Gehäuse ausgebildet ist, und/oder
- ein oder mehrere aktive und/oder passive Baugruppen umfasst, bevorzugt aktive und/oder passive Ventile, besonders bevorzugt zumindest ein Schaltventil, ein Regelventil, ein Druckregelventil, ein Rückschlagventil, ein Richtungs-Ventil, einen Strömungsteiler und/odereinen Hydraulikfluidspeicher, und/oder
- hydraulische Anschlüsse zu der Motor-Pumpe-Gruppe und zumindest einem Unterverbraucher umfasst, und/oder
- der Motor-Pumpe-Gruppe als Volumenstromregler/-lieferant eine Druckregelfunktion hinzufügt, vorzugsweise mit Hilfe eines Druckregelventils, und/oder
- den Hydraulikfluidstrom der Motor-Pumpe-Gruppe gezielt zu einer Vielzahl von Unterverbrauchern leitet, und/oder
- zumindest einen Hydraulikfluidspeicher ansteuert oder umfasst, und/oder
- eine Failsafe-Funktionalität schafft.

5. Hydrauliksystem nach einem der vorhergehenden Ansprüche,
- wobei ein Elektromotor bzw. Elektromotorgenerator (21) der Motor-Pumpe-Gruppe (20) bevorzugt ein Synchronmotor ist, und/oder
- wobei eine hydraulische Pumpe (22) der Motor-Pumpe-Gruppe (20) eine Zahnradpumpe, insbesondere eine Innenzahnradpumpe ist.

6. Hydrauliksystem nach einem der vorhergehenden Ansprüche, weiterhin umfassend
eine Elektronikeinheit (10'), die mit dem Elektromotor (21) der Motor-Pumpe-Gruppe (20) genau oder zumindest über drei Motorphasenleitungen oder Magnetspulenzuleitungen verbunden ist, wobei bevorzugt die Motor-Pumpe-Gruppe und die Elektronikeinheit in einem gemeinsamen Gehäuse (11a) angeordnet sind.

7. Achssatz (1) umfassend entweder
- ein erstes und ein zweites Hydrauliksystem nach einem der Ansprüche 1 bis 5, mit bevorzugt einer gemeinsamen Elektronikeinheit (10), wobei besonders bevorzugt die Motor-Pumpe-Gruppen (20) und die gemeinsame Elektronikeinheit in einem gemeinsamen Gehäuse angeordnet (1a) sind, oder
- ein erstes und ein zweites Hydrauliksystem nach Anspruch 6, mit jeweils einem gemeinsamem Gehäuse (11a), welche fest miteinander verbunden, bevorzugt miteinander verschraubt oder auf einer gemeinsamen Montageplatte montiert sind, und/oder die in einem gemeinsamen Gehäuse angeordnet sind.

8. Achssatz (1) nach Anspruch 7, wobei das erste Hydrauliksystem als Koppelmittel zwei O-Ringe (40) oder Koppeladapter (41) umfasst, und das zweite Hydrauliksystem als Koppelmittel zwei Fluidleitungen (42) umfasst.

9. Baukasten umfassend
- ein Hydrauliksystem nach einem der Ansprüche 1 bis 6 und ein Koppelmittel in Form von zwei Fluidleitungen (42) und ein Koppelmittel in Form von zwei O-Ringen (40) und/oder zwei Koppeladaptern (41), und/oder
- einen Achssatz (1) nach einem der Ansprüche 7 oder 8 und zwei Koppelmittel in Form von jeweils zwei Fluidleitungen und zwei Koppelmittel in Form von jeweils zwei O-Ringen und/oder zwei Koppeladaptern.

10. Hydrauliksystem nach einem der Ansprüche 1 bis 6, wobei
- der Verbraucher (2) an dem Befestigungsabschnitt (23) der Motor-Pumpe-Gruppe (20) befestigt ist und Koppelmittel in Form von zwei O-Ringen (40) oder zwei Koppeladaptern (41) eine hydraulische Verbindung zwischen Motor-Pumpe-Gruppe und Verbraucher schaffen, oder
- der Verbraucher von der Motor-Pumpe-Gruppe entfernt angeordnet ist und Koppelmittel in Form von zwei Fluidleitungen (42) eine hydraulische Verbindung zwischen Motor-Pumpe-Gruppe und Verbraucher schaffen.

11. Achssatz nach einem der Ansprüche 7 oder 8, wobei
in erstem und zweitem Hydrauliksystem
- jeweils der Verbraucher (2) an dem Befestigungsabschnitt (23) der Motor-Pumpe-Gruppe (20) befestigt ist und Koppelmittel in Form von zwei O-Ringen (40) oder zwei Koppeladaptern (41) eine hydraulische Verbindung zwischen Motor-Pumpe-Gruppe und Verbraucher schaffen,
oder
- jeweils der Verbraucher von der Motor-Pumpe-Gruppe entfernt angeordnet ist und Koppelmittel in Form von zwei Fluidleitungen (42) eine hydraulische Verbindung zwischen Motor-Pumpe-Gruppe und Verbraucher schaffen,
oder wobei
- in dem ersten Hydrauliksystem der Verbraucher an dem Befestigungsabschnitt der Motor-Pumpe-Gruppe befestigt ist und Koppelmittel in Form von zwei O-Ringen oder zwei Koppeladaptern eine hydraulische Verbindung zwischen Motor-Pumpe-Gruppe und Verbraucher schaffen, und
- in dem zweiten Hydrauliksystem der Verbraucher von der Motor-Pumpe-Gruppe entfernt angeordnet ist und Koppelmittel in Form von zwei Fluidleitungen eine hydraulische Verbindung zwischen Motor-Pumpe-Gruppe und Verbraucher schaffen.

12. Fahrwerkachse (51) umfassend zwei Hydrauliksysteme nach einem der Ansprüche 1 bis 6 oder 10 oder einen Achssatz (1) nach einem der Ansprüche 7, 8 oder 11, wobei die Fahrwerkachse bevorzugt vormontiert ist und/oder zwei steuerbare Stoßdämpfer (54) aufweist, die besonders bevorzugt jeweils mit den beiden Verbrauchern (2) der beiden Hydrauliksysteme oder des Achssatzes hydraulisch verbunden sind oder jeweils die Verbraucher bilden.

13. Fahrwerksystem (50) für ein Fahrzeug, umfassend zumindest einen ersten und zweiten hydraulisch steuerbaren Stoßdämpfer (54), welche bevorzugt einer gemeinsamen Fahrwerkachse (51) zugeordnet oder an einer gemeinsamen Fahrwerkachse angeordnet sind, sowie ein erstes und ein zweites Hydrauliksystem nach einem der Ansprüche 1 bis 6 oder 10 oder einen Achssatz nach einem der Ansprüche 7, 8 oder 11, wobei bevorzugt die Motor-Pumpe-Gruppe (20) oder der Verbraucher (2) des ersten Hydrauliksystems Druckkammern (52) des ersten Stoßdämpfers hydraulisch verbindet und die Motor-Pumpe-Gruppe oder der Verbraucher des zweiten Hydrauliksystems Druckkammern des zweiten Stoßdämpfers hydraulisch verbindet.
